# EUROPEAN PATENT SPECIFICATION

(11) **EP 2 440 794 B1**
(45) Date of publication and mention of the grant of the patent: **28.10.2015**
(21) Application number: 10717152.2
(22) Date of filing: 05.05.2010
(51) Int. Cl.: F16B 5/02, F16B 13/12, F16B 17/00, F16B 19/00, F16B 21/06, F16B 21/07

(54) **DEVICE FOR FASTENING PANELS**
VORRICHTUNG ZUR PLATTENFIXIERUNG
DISPOSITIF DE FIXATION DE PANNEAUX

(30) Priority: 08.06.2009 ES 200930280; 05.11.2009 ES 200930960
(43) Date of publication of application: 18.04.2012
(73) Proprietor: Illinois Tool Works Inc., Glenview, IL 60025 (US)
(72) Inventor: PICANYOL ROIG, Jordi, E-08520 Barcelona (ES); COLOMER KAMMÜLLER, Carlos, E-08520 Barcelona (ES); VALLS SERRAT, Juan, E-08520 Barcelona (ES)
(74) Representative: Carpintero Lopez, Francisco
(86) International application number: PCT/EP2010/056092
(87) International publication number: WO 2010/142499

(56) References cited:
- FR-A1- 2 671 147
- GB-A- 2 195 390
- GB-A- 2 226 862
- US-A1- 2003 099 525

## Description

### Object of the invention

This invention relates to a clip for fixing panels, and more specifically for the fixing of a primary panel that is resistant and provided with an opening or lug, with a secondary panel provided with at least an eyelet or an oblong or circular opening for the loose fitting of a shifting rod of the fixing device or lug or a screw bolt of the primary panel. The device of the invention has been especially devised to prevent the secondary panel from shifting sideways with respect to the primary panel.

This device is especially applicable to the field of the motor industry, for example to fix a primary panel of the bodywork, with secondary panels, such as inner or outer panels in plastic, fabric or other similar materials.

### Background of the invention

There are different sectors, such as the motor industry, where there is frequently the need to fix secondary panels made in plastic or similar materials, to a resistant primary panel, which is generally the bodywork of the vehicle. These secondary panels, in the case of the motor industry, can be, for example, outer linings of the wheel arches or the inner lining of the doors, the dashboard or other parts of the vehicle.

In some cases these primary and secondary panels have openings to assemble fixing devices, the openings of the primary panel having suitable dimensions for the tight fitting of the fixing device, whereas the openings of the secondary panel have greater dimensions in order to facilitate the assembly operations, especially regarding its positioning facing the opening of the primary panel and the introduction through said facing openings of the fixing device, either manually or using specific automatic tools.

In other cases, the primary panel has lugs that pass loosely through the openings in the secondary panel, with a stop piece placed on the free end of the lug that forms, together with said lug, the fixing device of the panels.

There are currently three types of devices in use for fixing a primary panel and a secondary panel.

A first type of fixing devices, used when the two panels have thoroughfare openings, includes devices comprising a plug that is introduced through the openings of the primary panels and a screw placed on said plug that determines the tightening of the panels to be joined. A device of this type is disclosed in the French application FR-2671147-A1.

FR-2671147-A1 discloses a device for immobilizing two components which are assembled by the pressure of one on the other, particularly for a motor vehicle. This device for immobilising two components which are intended to be joined together by pressure, by means of a screw passing through an opening formed in the two components and of a nut screwed onto the said screw consists of a bush including a shank surmounted by a flange, the said shank comprising a free end penetrating into the opening of the component in order to interact positively with the component, and the said flange comprising a free edge interacting positively with the component, so that the two components are both immobilised under the clamping effect of the screw.

A second type of fixing devices, also used when the two panels have thoroughfare openings, includes the devices comprising a stop piece provided with a central opening for the assembly by pressure of a shifting rod that passes at least partially through the openings in the primary and secondary panels and has an operating head at the rear end.

A third type of fixing devices, used when the primary panel has lugs intended to be mounted loosely and through the openings in the secondary panel, comprise a stop piece that is assembled by pressure on the free end of said lug and acts frontally against the secondary panel, forming the fixing device with said lug.

These aforementioned devices frontally press the primary and secondary panels together, but they do not effectively prevent the secondary panel, provided with an oblong or circular opening or eyelet for the loose passage of the fixing device, from describing small sideways movements with respect to the fixing device, causing friction against the primary panel in the fixing area, which causes scratches on the metal primary panel that may facilitate oxidation or corrosion, especially when said primary panel has a protective coating of paint or the like, which is damaged or removed by the continuous friction of the secondary panel.

Therefore, the application of these fixing devices is not especially indicated for the fixing of panels in some sectors, such as in the motor industry, which offers long-term guarantees against corrosion.

US 2003/099525 A1 discloses a shear resistant fastener assembly for supporting structures from a wall behind which there are no supporting framework, the wall defiling therethrough an opening having a predetermined size and configuration and bordered by an interior peripheral surface having the thickness of the wall, the fastener assembly comprising an anchor plate having a predetermined length and a predetermined width and adapted to be inserted through the opening in the wall and to be positioned flatly against the rear surface of the wall, and an insert having a predetermined size and having a configuration the same as that of the wall opening and adapted to fit closely within the openings and against the interior peripheral surface of the opening. and including an arrangement for connecting together the anchor plate and the insert.

The problem faced is the development of a fixing device that allows its assembly by pressure, using a pistol or specific tools, and which prevents the shifting of the secondary panel with respect to the primary panel, thus preventing scratches and the accelerated corrosion of said primary panel.

### Description of the invention

The device for fastening panels is of the type comprising a stop piece provided with a central opening for the assembly of a shifting rod provided with a rear acting head on its rear end, or a fixed lug defined on the primary panel, said stop piece forming together with the shifting rod or the fixed lug a fixing device for the primary panel, preferably in metal, with the secondary panel of plastic material or the like.

This device is also of the type in which at least one of said parts (stop piece or shifting rod), has a front surface intended to face the secondary panel and exert a certain pressure against said secondary panel, thus being fixed to the primary panel.

With these mentioned features, which are known by themselves, the device of the invention has special construction features the purpose of which are to lock the secondary panel, provided with openings for the assembly of the fixing device, to said fixing device; preventing the shifting of said secondary panel and said secondary panel from causing scratches on the primary panel, preferably, which translates into an effective reduction of the risk of damage and corrosion to the primary panel in the areas of fixing to the secondary panel.

To do this, and according to the invention, the device comprises a plurality of prongs defined or fixed, by partial fixing, for example, on the front surface of the part that is facing the secondary panel, and which protrude from said front surface; said prongs forming means intended to interlock with the material of the secondary panel during the assembly of the fixing device, and to prevent said secondary panel from moving sideways with respect to the fixing device.

The interlocking of said prongs in the secondary panel determines that the secondary panel is prevented from moving sideways with respect to the fixing device, therefore preventing the secondary panel from moving sideways with respect to the primary panel and from causing scratches on it.

In a first embodiment of the invention, the prongs are fixed in a peripheral area of the front surface of the stop piece; said stop piece having on its front surface longitudinal holding legs, arranged about the central opening, and intended to be introduced into openings or eyelets defined both on the primary panel and on the secondary panel; said legs have an outer rib to keep them in the assembly position.

In this first embodiment the shifting rod is assembled by the rear area with the possibility of longitudinal shifting in the central opening of the stop piece, causing the lateral expansion or opening of the longitudinal legs of the stop piece when advanced and therefore the fixing of the primary and secondary panels.

In a second embodiment the prongs are fixed onto the front surface of the rear head of the shifting rod, said shifting rod being mounted by the rear area on the opening of the stop piece provided with the longitudinal legs mentioned in the previous embodiment.

In this second embodiment the rear head of the rod has a greater front surface than the stop piece, the prongs being arranged in the peripheral area of the front surface of the rear head that protrudes from the front projection of the stop piece. Additionally, said front surface of the rear head of the rod has a central recess to house the stop piece, such that in the working position when assembled the portion of the front surface of the rear head, which carries the prongs, comes into direct and frontal contact with the secondary panel, into which the prongs are embedded.

In a third embodiment the prongs are arranged on the front surface of a stop piece which, in contrast to the ones above, does not have front legs but has the central opening to receive, in this case, a fixed lug that is integral to the primary panel and which loosely passes through the opening of the secondary panel.

In this embodiment the lug of the primary panel has on its front end front coupling means in the central opening of the stop piece.

In a fourth embodiment the rod, intended to be mounted through the openings of the primary panel and the secondary panel, has an outer threading for ioupling in the opening of the stop piece carrying the prongs, and a rear head that acts frontally against said primary panel; the rod together with the rear head being configured as a screw bolt.

In any of the previous cases, and as mentioned above, the essential feature of the device of the invention consists in the existence and arrangement of said prongs, on the front surface of the parts making up the device and specifically on a front surface that in its working position is intended to be in contact with the secondary panel such that the prongs are embedded into the material of said secondary panel, preventing it from moving sideways with respect to the fixing device and the primary panel.

The arrangement of the prongs described above, which are preferably made in metal, requires the use of means so that said prongs become embedded or interlocked inside the stop piece or the shifting rod, depending on the case; which complicates its manufacture.

In order to simplify the manufacture of the device without this affecting its efficacy, we contemplate a fifth embodiment of the invention wherein the prongs that hold the primary and secondary panels together are formed from embedded retaining elements shaped as sharp appendices or teeth that are made in the same material and using the same process as for the manufacture of the front surface of the stop piece or on the front surface of the rear head of the shifting rod, either in metal or in plastic material.

The savings in time and cost is important, since the sharp prongs are formed in the same manufacturing process of said bodies.

As in the previous cases, the sharp prongs are evenly or randomly distributed over the surface that will be in contact with the panels, thus ensuring perfect interlocking between them.

These sharp prongs can be shaped as a cone, a truncated cone, a pyramid or any fancy shape, including cylindrical, with a sharp tip and that allows to be driven into the primary and secondary panels and therefore make them interlock, preventing the relative movement between them that damages the panels.

### Description of the drawings

In order to complement the description that is being made and with the object of aiding towards a better understanding of the features of the invention, attached to the present specification is a set of drawings in which the following has been represented with an illustrative and non-limiting nature:
- Figure 1 shows an elevation view of an embodiment of the device in a non- operative position with the prongs fixed on the front surface of the stop piece.
- Figure 2 shows an elevation view of the device of Figure 1 disassembled and showing a vertical cross-section of the stop piece.
- Figure 3 shows an elevation view of the device of the previous figures with the shifting rod in a non-operative position, expanding the front legs of the stop piece sideways.
- Figure 4 shows an elevation view of the device of the previous figures in a working position, fixing a metallic primary panel with a secondary panel in plastic and with the prongs embedded into the secondary panel.
- Figure 5 shows an elevation view of a variant embodiment of the device of the previous figures, wherein the prongs are arranged on the front surface of the rear head of the shifting rod.
- Figure 6 shows an elevation view of the device of Figure 5 in a working position, fixing a metallic primary panel with a secondary panel in plastic and with the prongs embedded into the secondary panel.
- Figure 7 shows an elevation view of a variant embodiment of the device unassembled and wherein the prongs are fixed on the front surface of a stop piece intended to be fixed onto a fixed lug of the primary panel, which passes loosely through the opening in the secondary panel.
- Figure 8 shows a partially sectioned elevation view of a variant embodiment of the device, where the rod has an outer threading for its coupling with the stop piece, said rod having a rear head taking being configured as a screw bolt.
- Figure 9 shows an elevation view of a fifth embodiment of the fixing device for panels of the invention, wherein the prongs are sharp.
- Figure 10 shows a plan view of the device shown in the previous figure.

### Preferred embodiment of the invention

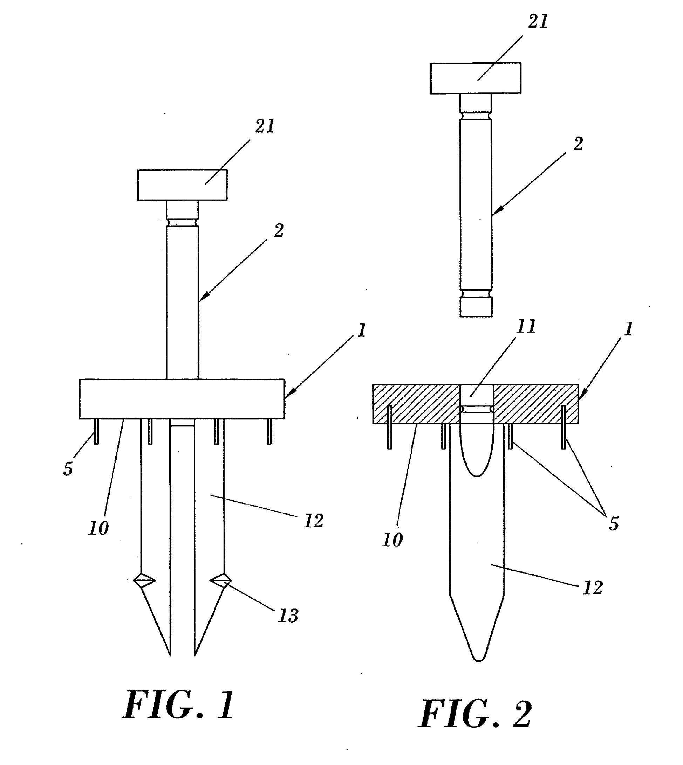

In the embodiment shown in figures 1 to 4, the fixing device comprises a stop piece (1) with a central opening (11) for the assembly of a shifting rod (2). In this embodiment of the primary panel (4), made in metal, is provided with an opening (41) for the tight assembly of the fixing device, and the secondary panel (3) is provided with an eyelet or opening (31), oblong or circular in shape, for the loose assembly of said fixing device.

The stop piece (1) has a front surface (10) intended to be faced with the secondary panel (3) and longitudinal legs (12) that are arranged about a central opening (11), provided with an outer retaining rib (13), intended to be introduced through the openings (31 , 41) of the secondary (3) and primary (4) panels.

The fixing device comprises prongs (5), in this case made in metal, that are partially embedded in said front surface (10) and protrude from it, forming means intended to be embedded in the material of the secondary panel (3), preventing the sideways movement of said secondary panel (3) with respect to the fixing device.

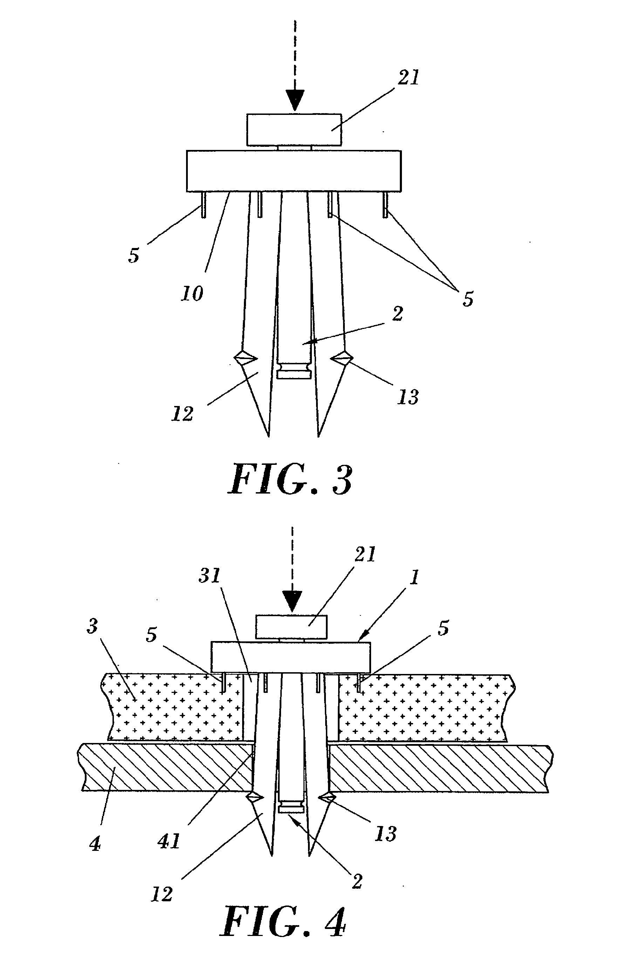

As can be observed in Figure 4, the movement of the shifting rod (2) towards the front area, introduced through the rear area of the central opening (11) of the stop piece (1), simultaneously causes the prongs (5) to be driven into the secondary panel (3) and the sideways expansion of the longitudinal legs (12) previously introduced into the openings (31, 41) of the secondary (3) and primary (4) panels; the device thus guarantees the fixing of both panels (3, 4) and the sideways immobilisation of the secondary panel (3) due to the action of the prongs (5).

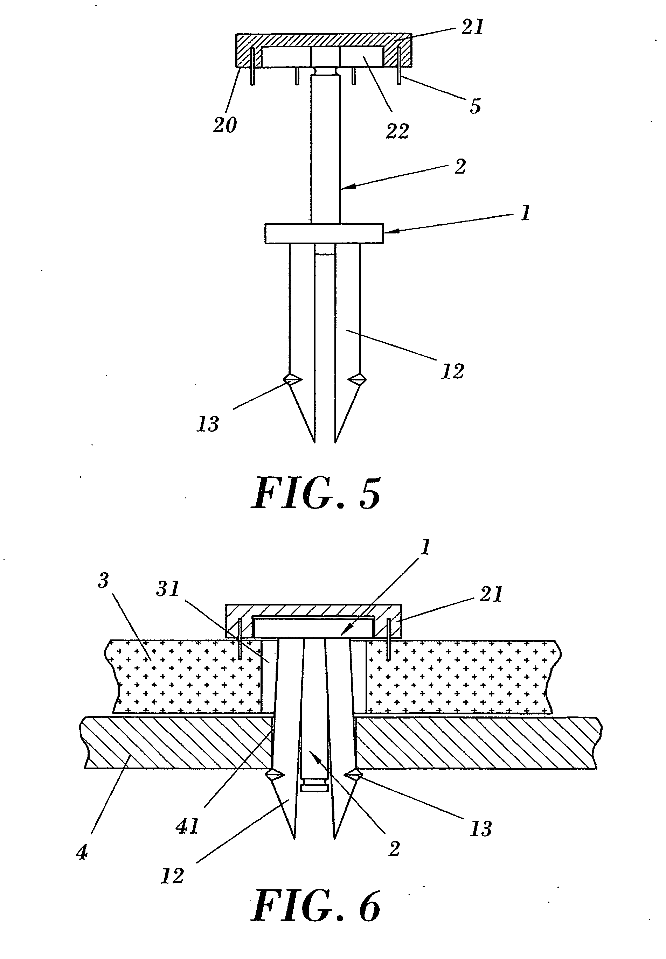

In the variant embodiment shown in figures 5 and 6, the primary (4) and secondary (3) panels have openings (31 , 41) similar to those of the previous embodiment in order to assemble the fixing device.

In this variant embodiment, the prongs (5) are partially embedded in a peripheral area of a front surface (20) of a rear head (21) of the shifting rod (2). Said front surface (20) has a greater surface than the front protrusion of the stop piece (1) and has a central recess (22) to house the stop piece (1) in the working assembled position of the device, shown in Figure 6.

In this working position the peripheral area of the front surface (20) comes into front contact with the secondary panel (3), into which the prongs are embedded (5); said secondary panel (3) being prevented from moving sideways.

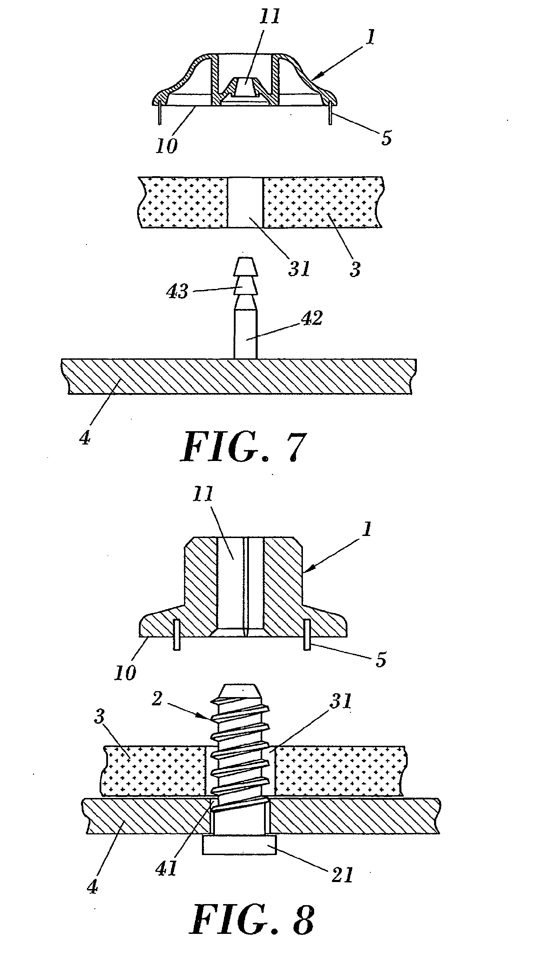

Figure 7 shows a variant embodiment of the device applicable when the primary panel (4) has, instead of the opening (41), a protruding fixed lug (42) for its loose assembly through the opening (31) of the secondary panel (3).

In this variant embodiment the stop piece (1) lacks front legs and has, as in the previous embodiments, a central opening (11) for its coupling and fixing on the free end of the fixed lug (42), integral to the primary panel (4); the prongs (5) being fixed onto a peripheral area of the front surface (10), intended to act against the secondary panel (3) of plastic material, where said prongs (5) are embedded, thus preventing the sideways movement of said secondary panel (3).

As it can be seen in said Figure 7, the fixed lug (42) of the primary panel (4) has on its front end some front coupling means (43) on the central opening (11) of the stop piece (1).

In the embodiment shown in Figure 8 the shifting rod (2), intended to be assembled through the openings (41 , 31) of the primary (4) and secondary (3) panels has an outer threading for its coupling in the central opening (11) of the stop piece (1) carrying the prongs (5) and a rear head (21) that acts frontally against said primary panel (4); the shifting rod (2) together with the rear head (21) being configured as a screw bolt.

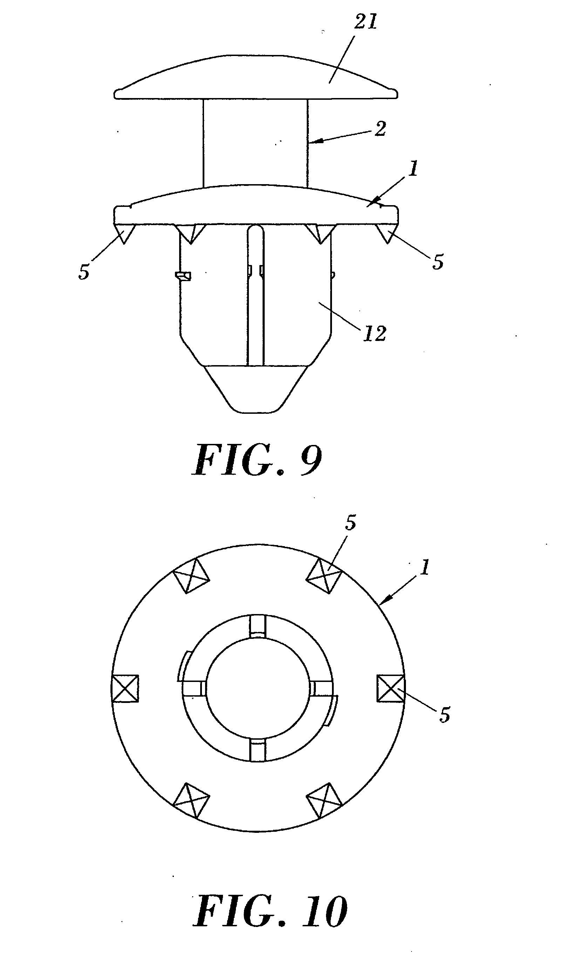

Figures 9 and 10 show respective elevation and plan views of a fifth embodiment of the fixing device for panels.

These figures show the embodiment including prongs (5) formed from sharp retaining elements on the front surface (10) of the stop piece (1), but we must indicate that these same sharp prongs (5) can be included into the front surface (20) of the rear head (21) of the shifting rod (2), as shown in figures 5 and 6.

As it can be seen in figures 9 and 10, the device is formed by means of a stop piece (1) having a central opening (11) for the assembly of the shifting rod (2) joined to the rear head (21) on which pressure is exerted when embedded.

The stop piece (1) has longitudinal legs (12) that expand when the shifting rod (2) is introduced, fixing it when embedded.

The advantage provided by this fifth variant embodiment is based on performing on the very stop piece (1) of the prongs (5) that are formed as sharp embedded elements, made in the same material as the stop piece (1).

Figures 9 and 10 show the uniform distribution of these sharp prongs (5) on the surface of the stop piece (1), distributed along an imaginary circumference that passes through their geometric centre, but which could also be distributed non-uniformly or even at different distances from the geometric centre of the relevant body.

These sharp prongs (5) can be of any shape, such as for example from the pyramidal shape shown in figures 9 and 10 to conical, frusto-conical, cylindrical shapes, etc., without disregarding any suitable shape that facilitates embedding between the primary (4) and secondary (3) panels to be joined together.

Having sufficiently described the nature of the invention, as well as a preferred embodiment thereof, we now state that the materials, shape, size and arrangement of the elements described can be modified, as long as this does not involve the modification of the essential features of the invention claimed below.

## Claims

1. A fixing device for fastening panels, specifically for the fixing of a primary panel (4), provided with an opening (41), with a secondary panel (3) provided with at least one opening (31) for the loose assembly of said fixing device, said fixing device comprising a stop piece (1) provided with a central opening (11) for its coupling with a shifting rod (2) provided with a rear head (21); the stop piece (1) and/or the rear head (21) of the shifting rod (2) having a front surface (10, 20) intended to face the secondary panel (3), and to exert pressure against said secondary panel (3), thus fixing it with respect to the primary panel (4); and it comprises a plurality of prongs (5); said prongs (5) forming means intended to be embedded into the material of the secondary panel (3), and to prevent the sideways movement of said secondary panel (3) with respect to the fixing device, **characterised in that** said prongs (5) are partially embedded in said front surface (10, 20) and protrude from said front surface (10, 20).

2. A fixing device for fastening panels, specifically for the fixing of a primary panel (4), provided with a lug (42), with a secondary panel (3) provided with at least one opening (31) for the loose assembly of said fixing device, said fixing device comprising a stop piece (1) provided with a central opening (11); the stop piece (1) and/or the rear head (21) of the shifting rod (2) having a front surface (10, 20) intended to face the secondary panel (3), and to exert pressure against said secondary panel (3), thus fixing it with respect to the primary panel (4); and it comprises a plurality of prongs (5); said prongs (5) forming means intended to be embedded into the material of the secondary panel (3), and to prevent the sideways movement of said secondary panel (3) with respect to the fixing device, **characterised in that** said prongs (5) are partially embedded in said front surface (10_{.} 20) which protrude from said front surface (10, 20) and **in that** the central opening (11) is for its coupling with a fixed bolt (42) of the primary panel (4).

3. A device according to any of claims 1 and 2, wherein the prongs (5) are fixed into a peripheral area of the front surface (10) of the stop piece (1).

4. A device according to claims 1 and 3, wherein the stop piece (1) has on its front surface longitudinal legs (12) arranged about the central opening (11), and intended to be introduced into the openings (31 , 41) of the primary (4) and secondary (3) panels.

5. A device according to claim 4, wherein the longitudinal legs (12) of the stop piece (1) have an outer rib (13) to retain it on the assembly position.

6. A device according to claim 1, wherein the prongs (5) are mounted onto a peripheral area of the front surface (20) of the rear head (21) of the shifting rod (2).

7. A device according to claim 6, wherein the shifting rod (2) is mounted on the rear area with the possibility of longitudinal shifting in the central opening (11) of the stop piece (1), the rear head (21) of said shifting rod (2) having a greater surface than the front projection of the stop piece (1).

8. A device according to claim 7, wherein the prongs (5) are mounted on the peripheral area of the front surface (20) of the rear head (21) of the shifting rod (2) that protrudes sideways from the front projection of the stop piece (1).

9. A device according to claim 8, wherein the front surface (20) of the rear head (21) of the shifting rod (2) has centrally a recess (22) to house the stop piece (1) in the working position of the device.

10. A device according to any of claims 1 and 3, wherein the shifting rod (2), intended to be assembled through the openings (41 , 31) of the primary panel (4) and the secondary panel (3), has: an outer threading to be coupled in the central opening (11) of the stop piece (1) carrying the prongs (5), and a rear head (21) that acts frontally against said primary pane! (4); the shifting rod (2), together with the rear head (21), being configured as a screw bolt.

11. A device according to any of the previous claims, wherein the prongs (5) are made of the same material as the stop piece (1) and/or the shifting rod (2), said prongs (5) being sharp.

12. A device according to claim 11, wherein the sharp prongs (5) are evenly distributed over the surface on which they are placed.

## Patentansprüche

1. Befestigungsvorrichtung zur Plattenfixierung, insbesondere zur Befestigung einer primären Platte (4), die mit einer Öffnung (41) bereitgestellt ist, an einer sekundären Platte (3), die mit mindestens einer Öffnung (31) zur losen Montage der Befestigungsvorrichtung bereitgestellt ist, wobei die Befestigungsvorrichtung einen Anschlag (1) umfasst, der mit einer zentralen Öffnung (11) zum Koppeln davon mit einer Schubstange (2) bereitgestellt ist, die mit einem hinteren Kopf (21) bereitgestellt ist; wobei der Anschlag (1) und/oder der hintere Kopf (21) der Schubstange (2) eine vordere Oberfläche (10, 20) aufweisen, die zu der sekundären Platte (3) weisen soll und einen Druck auf die sekundäre Platte (3) ausübt, sodass diese in Bezug auf die primäre Platte (4) befestigt wird;
umfassend mehrere Zinken (5); wobei die Zinken (5) Mittel bilden, die zum Einbetten in das Material der sekundären Platte (3) und zum Verhindern der Seitwärtsbewegung der sekundären Platte (3) in Bezug auf die Befestigungsvorrichtung bestimmt sind,
**dadurch gekennzeichnet, dass** die Zinken (5) teilweise in der vorderen Oberfläche (10, 20) eingebettet sind und von der vorderen Oberfläche (10, 20) vorstehen.

2. Befestigungsvorrichtung zur Plattenfixierung, insbesondere zur Befestigung einer primären Platte (4), die mit einer Öffnung (42) bereitgestellt ist, an einer sekundären Platte (3), die mit mindestens einer Öffnung (31) zur losen Montage der Befestigungsvorrichtung bereitgestellt ist, wobei die Befestigungsvorrichtung einen Anschlag (1) umfasst, der mit einer zentralen Öffnung (11) bereitgestellt ist; wobei der Anschlag (1) und/oder der hintere Kopf (21) der Schubstange (2) eine vordere Oberfläche (10, 20) aufweisen, die zu der sekundären Platte (3) weisen soll und einen Druck auf die sekundäre Platte (3) ausübt, sodass diese in Bezug auf die primäre Platte (4) befestigt wird;
umfassend mehrere Zinken (5); wobei die Zinken (5) Mittel bilden, die zum Einbetten in das Material der sekundären Platte (3) und zum Verhindern der Seitwärtsbewegung der sekundären Platte (3) in Bezug auf die Befestigungsvorrichtung bestimmt sind,
**dadurch gekennzeichnet, dass** die Zinken (5) teilweise in der vorderen Oberfläche (10, 20) eingebettet sind und von der vorderen Oberfläche (10, 20) vorstehen, und dadurch, dass die zentrale Öffnung (11) zum Koppeln mit einem feststehenden Bolzen (42) der primären Platte (4) ausgelegt ist.

3. Vorrichtung nach einem der Ansprüche 1 und 2, wobei die Zinken (5) in einem Umfangsbereich der vorderen Oberfläche (10) des Anschlags (1) befestigt sind.

4. Vorrichtung nach einem der Ansprüche 1 und 3, wobei der Anschlag (1) an seiner vorderen Oberfläche Längsschenkel (12) aufweist, die um die zentrale Öffnung (11) angeordnet sind und zum Einführen in die Öffnungen (31, 41) der primären (4) und sekundären (3) Platte bestimmt sind.

5. Vorrichtung nach Anspruch 4, wobei die Längsschenkel (12) des Anschlags (1) eine äußere Rippe (13) aufweisen, um diese in der Montageposition zu halten.

6. Vorrichtung nach Anspruch 1, wobei die Zinken (5) auf einen Umfangsbereich der vorderen Oberfläche (20) des hinteren Kopfes (21) der Schubstange (2) montiert sind.

7. Vorrichtung nach Anspruch 6, wobei die Schubstange (2) am hinteren Bereich mit der Möglichkeit der Längsverschiebung in die zentrale Öffnung (11) des Anschlags (1) montiert ist, wobei der hintere Kopf (21) der Schubstange (2) eine größere Oberfläche als der vordere Vorsprung des Anschlags (1) aufweist.

8. Vorrichtung nach Anspruch 7, wobei die Zinken (5) auf einen Umfangsbereich der vorderen Oberfläche (20) des hinteren Kopfes (21) der Schubstange (2) montiert sind, die seitwärts von dem vorderen Vorsprung des Anschlags (1) vorsteht.

9. Vorrichtung nach Anspruch 8, wobei die vordere Oberfläche (20) des hinteren Kopfes (21) der Schubstange (2) mittig eine Vertiefung (22) zum Aufnehmen des Anschlags (1) in der Arbeitsposition der Vorrichtung aufweist.

10. Vorrichtung nach einem der Ansprüche 1 und 3, wobei die Schubstange (2) zur Montage durch die Öffnungen (41, 31) der primären Platte (4) und der sekundären Platte (3) ausgelegt ist und ein Außengewinde, das mit der zentralen Öffnung (11) des Anschlags (1) gekoppelt wird und die Zinken (5) trägt, und einen hinteren Kopf (21) aufweist, der von vorn auf die primäre Platte (4) einwirkt; wobei die Schubstange (2) zusammen mit dem hinteren Kopf (21) als Schraubbolzen konfiguriert ist.

11. Vorrichtung nach einem der vorhergehenden Ansprüche, wobei die Zinken (5) aus dem gleichen Material wie der Anschlag (1) und/oder die Schubstange (2) hergestellt sind, wobei die Zinken (5) scharf sind.

12. Vorrichtung nach Anspruch 11, wobei die scharfen Zinken (5) gleichmäßig über die Oberfläche verteilt sind, auf der sie angeordnet sind.

## Revendications

1. Dispositif de fixation pour attacher des panneaux, spécifiquement pour la fixation d'un panneau primaire (4) pourvu d'une ouverture (41) à un panneau secondaire (3) pourvu d'au moins une ouverture (31) pour l'assemblage lâche dudit dispositif de fixation, ledit dispositif de fixation comprenant un élément de butée (1) pourvu d'une ouverture centrale (11) en vue de son accouplement à une tige de déplacement (2) pourvue d'une tête arrière (21) ; l'élément de butée (1) et/ou la tête arrière (21) de la tige de déplacement (2) ayant une surface avant (10, 20) destinée à faire face au panneau secondaire (3) et à exercer une pression contre ledit panneau secondaire (3), pour ainsi le fixer par rapport au panneau primaire (4) ; ledit dispositif de fixation comprenant en outre une pluralité de branches (5) ; lesdites branches (5) formant des moyens destinés à être encastrés dans le matériau du panneau secondaire (3), et à empêcher le mouvement latéral dudit panneau secondaire (3) par rapport au dispositif de fixation, **caractérisé en ce que** lesdites branches (5) sont partiellement encastrées dans ladite surface avant (10, 20) et font saillie depuis ladite surface avant (10, 20).

2. Dispositif de fixation pour attacher des panneaux, spécifiquement pour la fixation d'un panneau primaire (4) pourvu d'un ergot (42) à un panneau secondaire (3) pourvu d'au moins une ouverture (31) pour l'assemblage lâche dudit dispositif de fixation, ledit dispositif de fixation comprenant un élément de butée (1) pourvu d'une ouverture centrale (11) ; l'élément de butée (1) et/ou la tête arrière (21) de la tige de déplacement (2) ayant une surface avant (10, 20) destinée à faire face au panneau secondaire (3) et à exercer une pression contre ledit panneau secondaire (3), pour ainsi le fixer par rapport au panneau primaire (4) ; ledit dispositif de fixation comprenant en outre une pluralité de branches (5) ; lesdites branches (5) formant des moyens destinés à être encastrés dans le matériau du panneau secondaire (3), et à empêcher le mouvement latéral dudit panneau secondaire (3) par rapport au dispositif de fixation, **caractérisé en ce que** lesdites branches (5) sont partiellement encastrées dans ladite surface avant (10, 20) et font saillie depuis ladite surface avant (10, 20) et **en ce que** l'ouverture centrale (11) est destinée à être accouplée à un boulon fixe (42) du panneau primaire (4).

3. Dispositif selon l'une quelconque des revendications 1 et 2, dans lequel les branches (5) sont fixées dans une zone périphérique de la surface avant (10) de l'élément de butée (1).

4. Dispositif selon les revendications 1 et 3, dans lequel l'élément de butée (1) présente, sur sa surface avant, des pattes longitudinales (12) agencées autour de l'ouverture centrale (11), et destinées à être introduites dans les ouvertures (31, 41) des panneaux primaire (4) et secondaire (3).

5. Dispositif selon la revendication 4, dans lequel les pattes longitudinales (12) de l'élément de butée (1) présentent une nervure extérieure (13) afin de le retenir sur la position d'assemblage.

6. Dispositif selon la revendication 1, dans lequel les branches (5) sont montées sur une zone périphérique de la surface avant (20) de la tête arrière (21) de la tige de déplacement (2).

7. Dispositif selon la revendication 6, dans lequel la tige de déplacement (2) est montée sur la zone arrière avec possibilité de déplacement longitudinal dans l'ouverture centrale (11) de l'élément de butée (1), la tête arrière (21) de ladite tige de déplacement (2) ayant une plus grande surface que la projection frontale de l'élément de butée (1).

8. Dispositif selon la revendication 7, dans lequel les branches (5) sont montées sur la zone périphérique de la surface avant (20) de la tête arrière (21) de la tige de déplacement (2) qui fait saillie latéralement depuis la projection frontale de l'élément de butée (1).

9. Dispositif selon la revendication 8, dans lequel la surface avant (20) de la tête arrière (21) de la tige de déplacement (2) présente centralement un retrait (22) pour recevoir l'élément de butée (1) dans la position de travail du dispositif.

10. Dispositif selon l'une quelconque des revendications 1 et 3, dans lequel la tige de déplacement (2), destinée à être assemblée à travers les ouvertures (41, 31) du panneau primaire (4) et du panneau secondaire (3), présente : un filetage extérieur destiné à être accouplé dans l'ouverture centrale (11) de l'élément de butée (1) portant les branches (5), et une tête arrière (21) qui agit frontalement contre ledit panneau primaire (4) ; la tige de déplacement (2), conjointement avec la tête arrière (21), étant configurée sous la forme d'un boulon fileté.

11. Dispositif selon l'une quelconque des revendications précédentes, dans lequel les branches (5) sont fabriquées en le même matériau que l'élément de butée (1) et/ou la tige de déplacement (2), lesdites branches (5) ayant des arêtes vives.

12. Dispositif selon la revendication 11, dans lequel les branches (5) à arêtes vives sont réparties uniformément sur la surface sur laquelle elles sont placées.
